# EUROPEAN PATENT SPECIFICATION

(11) **EP 4 077 540 B1**
(45) Date of publication and mention of the grant of the patent: **13.05.2026**
(21) Application number: 20830181.2
(22) Date of filing: 17.12.2020
(51) Int. Cl.: C08L 67/02

(54) **POLYESTER COMPOSITION**
POLYESTERZUSAMMENSETZUNG
COMPOSITION DE POLYESTER

(30) Priority: 19.12.2019 EP 19218223
(43) Date of publication of application: 26.10.2022
(73) Proprietor: SABIC Global Technologies B.V., 4612 PX Bergen op Zoom (NL)
(72) Inventor: VENDERBOSCH, Robert Walter, 6160 GA Geleen (NL); BOONMAN, Rob, 6160 GA Geleen (NL); MARTENS, Johannes Peter Antonius, 6160 GA Geleen (NL); WETERING, VAN DE, Karin Irene, 6160 GA Geleen (NL)
(74) Representative: Sabic Intellectual Property Group
(86) International application number: PCT/EP2020/086682
(87) International publication number: WO 2021/122927

(56) References cited:
- EP-A1- 1 612 234
- EP-A1- 1 719 803

## Description

The present invention relates to a composition comprising a polyester and a polyolefin. The invention further relates to a process for making such composition, an article comprising such composition and use of such composition for making an article.

Improving mechanical properties of a polyester composition by adding a polyolefin is known, e.g. from US2006287441, which discloses a method for manufacturing a resin composition from a raw material composition containing a polyester resin, a polyolefin resin and a compatibilizer. The process comprises a kneading step for kneading the raw material composition in the presence of moisture. As the compatibilizer, an ethylene-glycidylmethacrylate (GMA) copolymer and an ethylene-methacrylic acid copolymer ionomer are used in the examples.

These GMA functionalized polymers are currently under debate as they are associated with health risks. There is therefore a need for a compatibilizer free of GMA for use in blends of a polyester and a polyolefin.

Accordingly, it is an object of the invention to provide a polyester composition comprising a polyester, a polyolefin and a compatibilizer free of GMA.

It is another object of the invention to provide a polyester composition that is suitable for replacing currently used materials in articles that - when combined - interlock.

Accordingly, the invention provides a composition comprising A) a polyester, B) a polyolefin and C) a compatibilizer, wherein C) is a functionalized polyolefin containing hydroxyl functional groups or a reaction product of the functionalized polyolefin and a polyester, wherein
the total amount of A) and B) with respect to the total composition is at least 77 wt%, for example at least 79wt%, for example at least 80wt% and
the amount of C) with respect to the total composition is 0.1 to 23 wt%.

It was found according to the invention that many materials used as a compatibilizer for polymer combinations other than polyester and polyolefin cannot be used as a compatibilizer for polyester and polyolefin as they cause surface defects. The inventors have surprising found that the hydroxyl functionalized polyolefin as used in the composition of the invention results in a composition which does not have surface defects while having properties comparable to those of compositions made using GMA-containing compatibilizers.

It is noted that US20100143651 discloses a functionalized polyolefin containing hydroxyl functional groups and a composition comprising a polyolefin, a thermoplastic polyurethane and the functionalized polyolefin. US20100143651 does not disclose a composition comprising a polyester, a polyolefin and a functionalized polyolefin. US20100143651 does not disclose a composition comprising a polyester in a major amount.

### A) polyester

The amount of A) with respect to the total composition is typically 5 to 95 wt%.

Preferably, however, polyester is the main polymer in the composition. Accordingly, preferably, the amount of A) with respect to the total composition is greater than the amount of B) with respect to the total composition.

Preferably, the amount of A) with respect to the total composition is at least 50 wt%, more preferably at least 75 wt%. For example, the amount of A) with respect to the total composition is 75 to 94 wt%, 80 to 94 wt% or 85 to 92 wt%. The properties of the composition of these embodiments having a major amount of polyester allow it to be used in applications where polyester has been used.

Typically polyester resins include crystalline polyester resins such as polyester resins derived from an aliphatic or cycloaliphatic diol, or mixtures thereof, containing from 2 to about 10 carbon atoms and at least one aromatic dicarboxylic acid. Preferred polyesters are derived from an aliphatic diol and an aromatic dicarboxylic acid and have repeating units according to structural formula (VIII) 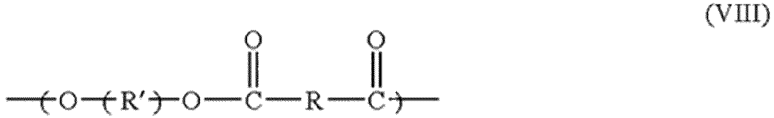 wherein, R' is an alkyl radical compromising a dehydroxylated residue derived from an aliphatic or cycloaliphatic diol, or mixtures thereof, containing from 2 to about 20 carbon atoms. R is an aryl radical comprising a decarboxylated residue derived from an aromatic dicarboxylic acid. In one embodiment of the present invention the polyester could be an aliphatic polyester where at least one of R' or R is a cycloalkyl containing radical. The polyester is a condensation product where R' is the residue of an aryl, alkane or cycloalkane containing diol having 6 to 20 carbon atoms or chemical equivalent thereof, and R is the decarboxylated residue derived from an aryl, aliphatic or cycloalkane containing diacid of 6 to 20 carbon atoms or chemical equivalent thereof. The polyester resins are typically obtained through the condensation or ester interchange polymerization of the diol or diol equivalent component with the diacid or diacid chemical equivalent component.

R' and R are preferably cycloalkyl radicals independently selected from the following structure IX:

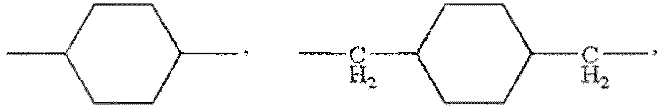

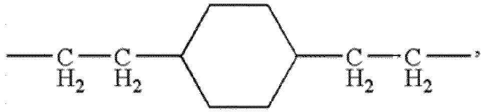

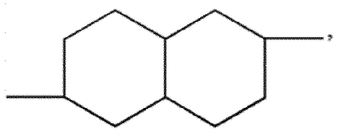

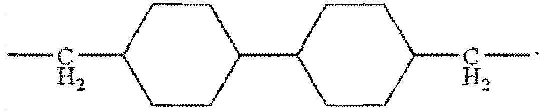

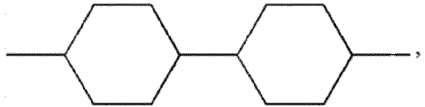

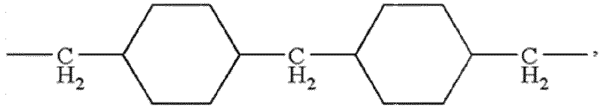

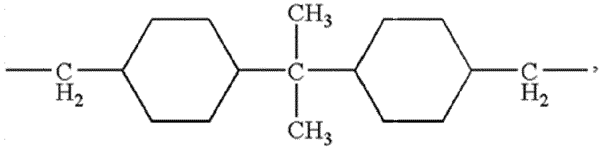

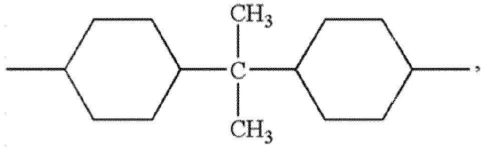

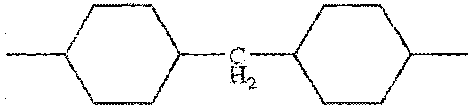

The diacids meant to include carboxylic acids having two carboxyl groups each useful in the preparation of the polyester resins of the present invention are preferably aliphatic, aromatic, cycloaliphatic. Examples of diacids are cyclo or bicyclo aliphatic acids, for example, decahydro naphthalene dicarboxylic acids, norbornene dicarboxylic acids, bicyclo octane dicarboxylic acids, 1,4-cyclohexanedicarboxylic acid or chemical equivalents, and most preferred is trans-1,4-cyclohexanedicarboxylic acid or a chemical equivalent. Linear dicarboxylic acids like adipic acid, azelaic acid, dicarboxyl dodecanoic acid, and succinic acid may also be useful. Chemical equivalents of these diacids include esters, alkyl esters, e.g., dialkyl esters, diaryl esters, anhydrides, salts, acid chlorides, acid bromides, and the like. Examples of aromatic dicarboxylic acids from which the decarboxylated residue R may be derived are acids that contain a single aromatic ring per molecule such as, e.g., isophthalic or terephthalic acid, 1,2-di(p-carboxyphenyl)ethane, 4,4'-dicarboxydiphenyl ether, 4,4'-bisbenzoic acid and mixtures thereof, as well as acids contain fused rings such as, e.g., 1,4- or 1,5-naphthalene dicarboxylic acids. In a preferred embodiment, the dicarboxylic acid precursor of residue R is terephthalic acid or, alternatively, a mixture of terephthalic and isophthalic acids.

Some of the diols useful in the preparation of the polyester resins of the present invention are straight chain, branched, or cycloaliphatic alkane diols and may contain from 2 to 12 carbon atoms. Examples of such diols include but are not limited to ethylene glycol; propylene glycol, i.e., 1, 2- and 1,3-propylene glycol; 2,2-dimethyl-1,3-propane diol; 2-ethyl, 2-methyl, 1,3-propane diol; 1,3- and 1,5-pentane diol; dipropylene glycol; 2-methyl-1,5-pentane diol; 1,6-hexane diol; dimethanol decalin, dimethanol bicyclo octane; 1,4-cyclohexane dimethanol and particularly its cis- and trans-isomers; triethylene glycol; 1,10-decane diol; and mixtures of any of the foregoing. Preferably, a cycloaliphatic diol or chemical equivalent thereof and particularly 1,4-cyclohexane dimethanol or its chemical equivalents are used as the diol component. Chemical equivalents to the diols include esters, such as dialkylesters, diaryl esters, and the like. Typically the polyester resin may comprise one or more resins selected from linear polyester resins, branched polyester resins and copolymeric polyester resins.

A preferred cycloaliphatic polyester is poly (cyclohexane-1,4-dimethylene cyclohexane-1,4-dicarboxylate) also referred to as poly (1,4-cyclohexane-dimethanol 1,4-dicarboxylate) (PCCD) which has recurring units of formula X:

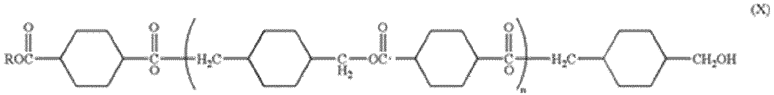

Preferably, the polyester is derived from structural units comprising at least one substituted or unsubstituted aliphatic diols, and /or substituted or unsubstituted cycloaliphatic diol and at least one substituted or unsubstituted aromatic dicarboxylic acid or substituted or unsubstituted aliphatic dicarboxylic acid.

Preferably, the polyester is at least one selected form a group consisting of poly(alkylene phthalate)s, poly(cycloalkylene phthalate)s, poly(alkylene dicarboxylate)s, esteramide copolymers, copolyesters derived from structural units comprising at least one alkyl diol, or cycloaliphatic diol, and at least one aromatic acid, aliphatic acids and cycloaliphatic acids.

Particularly preferably, the polyester comprises polyethylene terephthalate (PET), polybutylene terephthalate (PBT) and/or polycyclohexylenedimethylene terephthalate. Preferably, the polyester comprises PET. Preferably, the polyester in the composition according to the invention consists of PET.

The polyester may be in the form of unused pellet products or recycled (processed) products in the form of flake, pellet or powder, which may be derived e.g. from PET bottles. Preferably, the polyester is a recycled polyester, in particular a recycled PET, for example derived from PET bottles. Preferably the polyester, in particular PET, is dried before being mixed with other components of the composition according to the invention.

The polyester may be bio-based, i.e. the polyester may be a polyester produced from materials or products derived from or made using biological raw materials. Such materials are renewable and are typically obtained from or produced by living organisms such as, for example, plants, trees, algae, bacteria, yeast, fungi, protozoa, insects, animals, and the like. Processes for obtaining diacids from such biomaterials are known to those of skill in the art. Biobased or bioderived difunctional acids are preferred because of a lower ecological footprint associated with production and use of such materials.

Preferably, the polyester, in particular PET, has an intrinsic viscosity (IV) of 0.1 to 1.0 dl/g, for example 0.5 to 0.9 dl/g, as determined by according to ASTM D4603.

Preferably, the polyester, in particular PET, has a melt volume index (MVI) of 5 to 100 dg/min, for example 10 to 50 dg/min, according to ISO 1133 (2.16 kg, 280°C).

Preferably, the polyester, in particular PET, has a density of at most 1.35 g/cm³ as determined according to ISO 1183. This indicates a lower crystallinity of the polyester, in particular PET, which leads to desirable properties of the final composition.

### B) polyolefin

The amount of B) with respect to the total composition is typically 5 to 95 wt%.

Preferably, the amount of B) with respect to the total composition is at most 40 wt%, more preferably at most 35 wt%. For example, the amount of the polyolefin with respect to the total composition is 5 to 22.5 wt%, 5 to 20 wt%, preferably 6 to 18 wt% or 8 to 15 wt%.

The total amount of A) and B) with respect to the total composition is at least 80 wt% and at most 99.8 wt% with respect to the total composition. Preferably, the total amount of A) and B) with respect to the total composition is at least 85 wt%, at least 90 wt%, at least 95 wt%, at least 97 wt% or at least 99 wt%, with respect to the total composition.

Examples of the polyolefin include low density polyethylene (LDPE), linear low density polyethylene (LLDPE) and high density polyethylene (HDPE); polypropylene (PP) and an elastomeric copolymer of ethylene and an α-olefin having 4 to 10 carbon atoms.

The polyolefin may have a density of 0.850 to 0.970 g/cm³ determined according to ISO1183.

### LDPE, LLDPE and HDPE

The production processes of LDPE, LLDPE and HDPE are summarised in Handbook of Polyethylene by Andrew Peacock (2000; Dekker; ISBN 0824795466) at pages 43-66. The catalysts can be divided in three different subclasses including Ziegler Natta catalysts, Phillips catalysts and single site catalysts. The latter class is a family of different classes of compounds, metallocene catalysts being one of them. As elucidated at pages 53-54 of said Handbook a Ziegler-Natta catalysed polymer is obtained via the interaction of an organometallic compound or hydride of a Group I-III metal with a derivative of a Group IV-VIII transition metal. An example of a (modified) Ziegler-Natta catalyst is a catalyst based on titanium tetra chloride and the organometallic compound triethylaluminium. A difference between metallocene catalysts and Ziegler Natta catalysts is the distribution of active sites. Ziegler Natta catalysts are heterogeneous and have many active sites. Consequently polymers produced with these different catalysts will be different regarding for example the molecular weight distribution and the comonomer distribution.

### LDPE

The LDPE may be an ethylene homopolymer or may comprise a comonomer, for example butene or hexene.

Preferably, the LDPE has a density of 0.916 to 0.940 g/cm³, more preferably 0.920 to 0.930 g/cm³, determined according to ISO1183.

Preferably, the LDPE has a Melt flow index of 0.1 to 10.0 g/10min, more preferably 1.0 to 5.0 g/10min, determined according to ASTM D1238 (190°C/2.16kg).

The LDPE may be produced by use of autoclave high pressure technology or by tubular reactor technology.

In some embodiments, the polyolefin in the composition according to the invention is an LDPE having a density of 0.916 to 0.940 g/cm³ determined according to ISO1183 and a Melt flow index of 0.1 to 10.0 g/10min determined according to ASTM D1238 (190°C/2.16kg) and the amount of the LDPE in the composition is 5 to 15 wt%. Such composition may have a high gloss, a high MVR and a high tensile modulus while having acceptable impact strength and shrinkage.

### LLDPE

The LLDPE may be an ethylene homopolymer or may be a polyethylene copolymer comprising ethylene and a C3- C10 alpha-olefin comonomer (ethylene-alpha olefin copolymer). Suitable alpha-olefin co monomers include 1-butene, 1-hexene, 4-methyl pentene and 1-octene. The preferred comonomer is 1-hexene. Preferably, the alpha-olefin co monomer is present in an amount of about 5 to about 20 percent by weight of the ethylene-alpha olefin copolymer, more preferably an amount of from about 7 to about 15 percent by weight of the ethylene-alpha olefin copolymer.

Preferably, the density of the LLDPE may range between 0.915 g/cm³ and 0.940 g/cm³, preferably 0.930 to 0.940 g/cm³, determined according to ISO1183.

Preferably, the melt flow index of the LLDPE ranges from 0.1 to 5.0 g/10min, for example from 0.5 to 4.0 g/10min, for example from 1.0 to 3.0 g/10min, determined according to ASTM D1238 (190°C/2.16kg).

The technologies suitable for the LLDPE manufacture include but are not limited to gas- phase fluidized-bed polymerization, polymerization in solution, and slurry polymerization.

According to a preferred embodiment of the present invention the LLDPE has been obtained by gas phase polymerization in the presence of a Ziegler-Natta catalyst. According to another preferred embodiment, the LLDPE may be obtained by gas phase polymerization in the presence of a metallocene catalyst.

In some embodiments, the polyolefin in the composition according to the invention is an LLDPE having a density of 0.915 to 0.940 g/cm³ determined according to ISO1183 and a Melt flow index of 0.1 to 5.0 g/10min determined according to ASTM D1238 (190°C/2.16kg) and the amount of the LLDPE in the composition is 5 to 15 wt%. Such composition may have a high MVR and a high tensile modulus while having acceptable gloss, impact strength and shrinkage.

### HDPE

HDPE may be an ethylene homopolymer or may comprise a comonomer, for example butene or hexene.

Preferably, the HDPE has a density of 0.940 to 0.970 g/cm³, more preferably 0.950 to 0.965 g/cm³, determined according to ISO1183.

Preferably, the HDPE has a Melt flow index of 0.1 to 15.0 g/10 min, more preferably 1.0 to 10.0 g/10min, measured according to ASTM D1238 (190 ºC/5 kg).

In some embodiments, the polyolefin in the composition according to the invention is an HDPE having a density of 0.940 to 0.970 g/cm³ determined according to ISO1183 and a Melt flow index of 0.1 to 15.0 g/10min determined according to ASTM D1238 (190°C/2.16kg) and the amount of the HDPE in the composition is 5 to 15 wt%. Such composition may have a high gloss, a high MVR, a high tensile modulus and a low shrinkage while having acceptable impact strength.

### PP

With polypropylene as used herein is meant propylene homopolymer or a copolymer of propylene with an α-olefin, for example an α-olefin chosen from the group of α-olefin having 2 or 4 to 10 C-atoms, for example ethylene, for example wherein the amount of α-olefin is less than 10wt% based on the total propylene copolymer.

Polypropylene can be made by any known polymerization technique as well as with any known polymerization catalyst system. Regarding the techniques, reference can be given to slurry, solution or gasphase polymerizations; regarding the catalyst system reference can be given to Ziegler-Natta, metallocene or single-site catalyst systems. All are, in themselves, known in the art.

Preferably, the tensile modulus of the PP ranges from 800 to 1800 MPa, determined according to ASTM D790A.

Preferably, the melt flow index of the PP as determined using ASTM D1238 (230°C/2.16kg) ranges from 0.3 to 50 dg/min.

### elastomeric copolymer

The polyolefin may be an elastomeric copolymer of ethylene and an α-olefin having 4 to 10 carbon atoms. The α-olefin comonomer in the elastomeric copolymer is preferably an acyclic monoolefin such as 1-butene, 1-pentene, 1-hexene, 1-octene or 4-methylpentene. Most preferably, the elastomeric copolymer is an ethylene-1-octene copolymer.

Preferably, the elastomeric copolymer has a density of 0.850 to 0.910 g/cm³. Preferably, the density of the elastomeric copolymer is 0.865 to 0.910 g/cm³, for example 0.865 to 0.875 g/cm³ according to ASTM D792.

Preferably, the elastomeric copolymer has a melt flow index of 1.0 to 10.0 dg/min, for example 3.0 to 8.0 dg/min, measured in accordance with ASTM D1238 using a 2.16 kg weight and at a temperature of 190 ºC.

The elastomers may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The elastomer s may also be prepared using traditional types of heterogeneous multi-sited Ziegler-Natta catalysts.

Preferably, the amount of ethylene in the elastomer is at least 50 mol %. More preferably, the amount of ethylene in the elastomer is at least 57 mol%, for example at least 60 mol %, at least 65 mol% or at least 70 mol%. Even more preferably, the amount of ethylene in the elastomer is at least 75 mol%. The amount of ethylene in the elastomer may typically be at most 97.5 mol%, for example at most 95 mol% or at most 90 mol%.

In some embodiments, the polyolefin in the composition according to the invention is an elastomeric copolymer of ethylene and an α-olefin having 4 to 10 carbon atoms having a density of 0.850 to 0.910 g/cm³ determined according to ASTM D792 and a Melt flow index of 1.0 to 10.0 g/10min determined according to ASTM D1238 (190°C/2.16kg) and the amount of the elastomeric copolymer in the composition is 5 to 15 wt%. Such composition may have a high gloss, a high MVR, a high tensile modulus, a high impact strength and a low shrinkage.

In some embodiments, the polyolefin in the composition according to the invention is an elastomeric copolymer of ethylene and an α-olefin having 4 to 10 carbon atoms having a density of 0.850 to 0.910 g/cm³ determined according to ASTM D792 and a Melt flow index of 1.0 to 10.0 g/10min determined according to ASTM D1238 (190°C/2.16kg) and the amount of the elastomeric copolymer in the composition is 15 to 25 wt%. Such composition may have a high gloss, an extremely high impact strength and a low shrinkage while having acceptable MVR and tensile modulus.

### C) compatibilizer

The role of the compatibilizer is to decrease the interfacial tension between the immiscible blends of the polar polyester phase and the a-polar polyolefin phase. Addition of the compatibilizer improves adhesion between both phases and stabilizes the morphology of the polyester/polyolefin composition against coalescence, resulting in improved mechanical properties compared to the polyester/polyolefin composition without a compatibilizer.

The compatibilizer is a functionalized polyolefin containing hydroxyl functional groups or a reaction product of a functionalized polyolefin containing hydroxyl functional groups and a polyester (block copolymer or graft copolymer).

The amount of C) with respect to the total composition is 0.1 to 23 wt%, for example 0.1 to 21wt%, for example 0.1 to 20wt%, for example 0.1 to 15 wt%, for example 0.2 to 12 wt%, for example 0.3 to 10 wt% or for example 0.5 to 5 wt%. A lower amount of compatibilizer leads to a lower shrinkage and therefore the amount of C) in the composition is preferably 0.75 to 4 wt%, more preferably 1 to 3 wt%, even more preferably 1 to 2 wt%.

Preferably, the weight ratio of the amount of B) with respect to the amount of C) is 2 to 20, 2 to 15 or 3 to 10.

### Functionalized polyolefin containing hydroxyl functional groups

A functionalized polyolefin containing hydroxyl functional groups is per se known and can be prepared in various known ways.

Preferably, the functionalized polyolefin containing hydroxyl functional groups is prepared by reacting an alkanolamine with a grafted polyolefin formed by grafting a compound comprising an amine-reactive group onto the backbone of a polyolefin .

The term "amine-reactive group" as used refers to a chemical group or chemical moiety that can react with an amine group.

The method of the preparation of such hydroxyl functionalized polyolefin is per se known and described in detail e.g. in US20100143651, part of which is incorporated hereinbelow.

Examples of the amine-reactive group include anhydride groups, ester groups and carboxylic acid groups. Most preferably, the amine-reactive group is an anhydride group.

Examples of the compound comprising an amine-reactive group to be grafted onto the backbone of a polyolefin include ethylenically unsaturated carboxylic acids such as maleic acid, fumaric acid, itaconic acid, acrylic acid, methacrylic acid, and crotonic acid; acid anhydrides such as maleic anhydride and itaconic anhydride; vinyl benzyl halides such as vinyl benzyl chloride and vinyl benzyl bromide; alkyl acrylates and methacrylates such as methyl acrylate, ethyl acrylate, butyl acrylate, lauryl acrylate, methyl methacrylate, ethyl methacrylate, butyl methacrylate, and lauryl methacrylate; and ethylenically unsaturated oxiranes, such as glycidyl acrylate, glycidyl methacrylate, and glycidyl ethacrylate.

Preferred ethylenically unsaturated amine-reactive compounds include maleic anhydride, acrylic acid, methacrylic acid, glycidyl acrylate, glycidyl methacrylate.

Most preferably, the compound comprising an amine-reactive group is maleic anhydride.

Suitable examples of the polyolefin of the grafted polyolefin include those described as component B).

In some preferred embodiments, the polyolefin of the grafted polyolefin is an LLDPE, for example having a comonomer of 1-octene. The LLDPE may e.g. have a Melt flow index of 10 to 30 g/10min determined according to ASTM D1238 (190°C/2.16kg) and a density of 0.860 to 0.900 g/cm³ determined according to ISO1183. The LLDPE may e.g. have a Melt flow index of 0.1 to 10 g/10min determined according to ASTM D1238 (190°C/2.16kg) and a density of 0.900 to 0.915 g/cm³ determined according to ISO1183.

The amount of the compound reactive with the amino group of the alkanolamine with respect to the grafted polyolefin may e.g. be 0.01 to 10 wt%, for example 0.1 to 5 wt%, 0.2 to 2 wt% or 0.3 to 1 wt%.

The grafting may be performed by any known method, typically in the presence of a free radical initiator, for example peroxides and azo compounds, or by ionizing radiation. Organic initiators are preferred, such as any one of the peroxide initiators, for example, dicumyl peroxide, di-tert-butyl peroxide, t-butyl perbenzoate, benzoyl peroxide, cumene hydroperoxide, t-butyl peroctoate, methyl ethyl ketone peroxide, 2,5-dimethyl-2,5-di(tert-butyl peroxy)hexane, lauryl peroxide, and tert-butyl peracetate, t-butyl α-cumyl peroxide, di-t-butyl peroxide, di-t-amyl peroxide, t-amyl peroxybenzoate, 1,1-bis(t-butylperoxy)-3,3,5-trimethylcyclohexane, α,α'-bis(t-butylperoxy)-1,3-diisopropylbenzene, α,α'-bis(t-butylperoxy)-1,4-diisopropylbenzene, 2,5-bis(t-butylperoxy)-2,5-dimethylhexane, and 2,5-bis(t-butylperoxy)-2,5-dimethyl-3-hexyne. A suitable azo compound is azobisisobutyl nitrite.

The grafting may e.g. be performed by mixing the polyolefin with the amine-reactive compound in a melt, e.g. at a temperature of 120 to 260 °C, for example 130 to 250 °C.

Suitable alkanolamines are those of structure (I):

H₂N-R₁-OH (I),

wherein R1 is a divalent hydrocarbon radical, and preferably a linear hydrocarbon of the formula -(CH₂)ₙ-, where n is 2 to 10, preferably 2 to 8, more preferably from 2 to 6.

Preferably, the alkanolamine is selected from the group consisting of ethanolamine, 2-amino-1-propanol, 3-amino-1-propanol, 2-amino-1-butanol and 2-aminobenzyl alcohol.

The reaction of the alkanolamine with the grafted polyolefin may e.g. be performed by mixing the alkanolamine with the grafted polyolefin in a melt.

### Reaction product of hydroxyl functional polyolefin and polyester

The compatibilizer may be a reaction product of the hydroxyl functional polyolefin and a polyester.

Suitable examples of the hydroxyl functional polyolefin are described above.

Suitable examples of the polyester of the compatibilizer include those described as component A).

The amount of the hydroxyl functional polyolefin with respect to the total of the hydroxyl functional polyolefin and the polyester may e.g. be 10 to 90 wt%, for example 20 to 80 wt% or 30 to 70 wt%. In some embodiments, the amount of the hydroxyl functional polyolefin with respect to the total of the hydroxyl functional polyolefin and the polyester is 10 to 50 wt%, e.g. 20 to 45 wt%. In some embodiments, the amount of the hydroxyl functional polyolefin with respect to the total of the hydroxyl functional polyolefin and the polyester is 50 to 90 wt%, e.g. 55 to 80 wt%.

The reaction product may be a graft or block copolymer comprising a polyolefin part and a polyester part. The reaction of the polyester and the functionalized polyolefin may be transesterification using a suitable catalyst. Such transesterification is described e.g. in WO17097617. An example of the catalyst is phosphinic acid, diethyl, aluminum salt, which is also typically used as a flame retardant.

The reaction of the polyester and the functionalized polyolefin can be carried out in an organic solvent, for example aliphatic hydrocarbon solvents such as heptane, octane and decaline and aromatic hydrocarbon solvents such as toluene and xylene. Other examples of the organic solvent include dimethylformamide and tetrachloroethane.

The reaction of the polyester and the functionalized polyolefin can be carried out in a melt, such as by reactive melt extrusion. This is advantageous in that the tedious and expensive process of dissolving the functionalized polyolefin in the organic solvent is avoided.

Preferably, the total amount of A), B) and C) with respect to the total composition is at least 90 wt%, at least 92 wt%, at least 95 wt%, at least 98 wt%, at least 99 wt%, at least 99.9 wt% or 100 wt%.

### D) additives

The composition according to the invention may further comprise optional components different from the previously mentioned components of the composition, such as additives, wherein the total of the previously mentioned components and the optional components is 100 wt% of the total composition. Accordingly, the invention also relates to a composition consisting of the previously mentioned components and the optional components.

The additives may be added at any point, e.g. upon mixing of A), B) and C). Alternatively, when C) is a reaction product of the polyester and the functionalized polyolefin, some or all of the additives may be added upon preparation of C).

The additives may include stabilisers, e.g. heat stabilisers, anti-oxidants, UV stabilizers; colorants, like pigments and dyes; clarifiers; surface tension modifiers; lubricants; flame-retardants; mould-release agents; flow improving agents; plasticizers; anti-static agents; external elastomeric impact modifiers; blowing agents; inorganic fillers such as talc and reinforcing agents; and/or components that enhance interfacial bonding between polymer and filler, such as a maleated polypropylene. Talc may also act as a nucleating agent.

The amount of the additives may e.g. be 0.1 to 5 wt%, for example 0.2 to 1 wt%, based on the total composition.

In some embodiments, the composition comprises a flame retardant. An example of the flame retardant is phosphinic acid, diethyl, aluminum salt. Such flame retardant acts as a transesterification catalyst to accelerate the reaction between the polyester and the functionalized polyolefin.

### Properties of composition

Preferably, the composition according to the invention has melt volume flow rate (MVR) of at least 5 cc/10 min, for example 5 to 20 cc/10 min or 20 to 65 cc/10 min, as determined by ISO1133 (2.16 kg, 265 ºC, 300 seconds).

Preferably, the composition according to the invention has a shrinkage of at most 2%, more preferably at most 1.5%, more preferably at most 1.3%, more preferably at most 1.0%, as determined by ISO 294-4.

Preferably, the composition according to the invention has a Izod notched impact strength of at least 5 kJ/m², more preferably at least 7 kJ/m² or more preferably at least 10 kJ/m², as determined by ISO180 (23 ºC).

Preferably, the composition according to the invention has a Charpy unnotched impact strength of at least 5 kJ/m², more preferably at least 7 kJ/m² or more preferably at least 10 kJ/m², as determined by ISO179 (23 ºC).

Preferably, the composition according to the invention has a tensile modulus of at least at least 1800 MPa, more preferably at least 1900 MPa, as determined by ISO527.

Preferably, the composition according to the invention has a gloss of at least 50 gloss units, more preferably at least 75 gloss units, more preferably at least 90 gloss units, as determined by ISO2813 at a measurement angle of 60º.

### Other aspects

The composition of the invention may be obtained by a process comprising melt-mixing A), B) and C) and optionally the optional components by using any suitable means. Accordingly, the invention further relates to a process for the preparation of the composition according to the invention comprising melt mixing A), B) and C) and optional components. Preferably, the composition of the invention is made in a form that allows easy processing into a shaped article in a subsequent step, like in pellet or granular form. Preferably, the composition of the invention is in pellet or granular form as obtained by mixing all components in an apparatus like an extruder; the advantage being a composition with homogeneous and well-defined concentrations of the additives.

Suitable conditions for melt-mixing, such as temperature, pressure, amount of shear, screw speed and screw design when an extruder is used are known to the skilled person.

The invention further relates to an article comprising the composition according to the invention. Preferably, the article is an injection molded article.

In one embodiment, the article of the invention comprising a stud can suitably be used to interlock with another article of the invention comprising a receptacle for receiving the stud. For example, the stud of one article of the invention may be designed such that it can be removably attached to the protuberance of another article of the invention. For example, the stud and the protuberance may be designed for interlocking the articles, for example the stud and protuberance may be designed to form fit.

For purpose of the invention with stud is meant a protuberance projecting from a surface or a part.

The article of the invention is for example a building block, a hinge or a gear wheel.

In a special embodiment, the article of the invention comprises a stud for fitting into a complementary receptacle and comprises a receptacle, which is complementary to the stud. Examples of such articles are building blocks, wherein the stud(s) from the top of one block fit(s) into the receptacle(s) on the bottom of the next block and the stud(s) from the next block fit into the receptacle(s) on the bottom of another block, etc.

The invention therefore also relates to an assembly of at least two articles of the invention, wherein at least one of the at least two articles comprises a stud and another of the at least two articles comprises a receptacle for receiving the stud.

It is noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

### Experiments

Following materials were used.
PET1: copolymer of terephtalic acid, isophtalic acid and diethylene glycol, intrinsic viscosity of 0.800 dl/g as determined by according to ASTM D4603 and MVI of 20 dg/min (2.16 kg, 280°C) according to ISO 1133 (SABIC^{®} PET BC-112 as commercially available from SABIC)
POE1: copolymer of ethylene and 1-octene, MFI of 5 dg/min according to ASTM D1238 (2.16 kg, 190 ºC), density of 0.87 g/cm³ according to ASTM D792
POE-g-MAH#1: mLLDPE with 1-octene comonomer, MI = 30 dg/min (190 °C/2.16 kg), density = 870 kg/m³) grafted with maleic anhydride (1.14 wt%)
POE-g-MAH#2: mLLDPE with 1-octene comonomer, MI = 3.7 dg/min (190'C/2.16 kg), density = 912 kg/m³) grafted with maleic anhydride (1.32 wt%)
POE-g-OH: Reactive extrusion product of POE-g-MAH#2 (98.6 wt%) and ethanolamine (1.4 wt%) + Irganox 1010 (0.25 wt%) + Irgafos 168 (0.25 wt%), the amounts are with respect to the total of POE-g-MAH#2 and ethanolamine
POE-g-PET: Reactive extrusion product of PET1 (60 wt%) + POE-g-OH (40 wt%) + Irganox 1010 (0.25 wt%) + Irgafos 168 (0.25 wt%), the amounts are with respect to the total of POE-g-MAH#15 and ethanolamine

Further types of commercially available ethylene copolymers were used:

| | Comonomer 1 | Comonomer 1 amount (wt%) | Comonomer 2 | Comonomer 2 amount (wt%) | MFI (190 °C / 2.16 kg) (dg/min) | Density (kg/m³) | Tm (°C) |
|---|---|---|---|---|---|---|---|
| PE-GMA | Glycidyl metacrylate | 8 | - | - | 5 | 940 | 106 |
| PE-BA-MAH | butylacrylate | 17 | maleic anhydride | 3.1 | 5 | - | 91 |
| PE-MA-MAH | Methyl acrylate | 20 | maleic anhydride | 0.3 | 8 | 940 | 80 |
| PE-BA | butyl acrylate | 27 | - | - | 4 | 926 | 94 |
| PE-AE-MAH | ethylacrylate | 29 | maleic anhydride | 1.3 | 7 | 940 | 65 |
| PE-AH | Anhydride | High | - | - | 1.75 | 930 | 120 |
| PE-MA | methylacrylat e | 27-31 | - | - | 2-3.5 | 950 | 61 |
| LDPE-AH | anhydride | ns | - | - | 6.4 | - | 105 |
| PE-BA | butyl acrylate | 35 | - | - | 40 | 930 | 96 |
| PE-AA | acrylic acid | 7 | - | - | 7 | 930 | 102 |
| PE-MAA | methacrylic acid | 6.5 | - | - | 9 | 930 | 104 |
| PE-VA | Vinyl acetate | 9.3 | - | - | 2 | 930 | 86-105 |

Blends were prepared by melt-mixing the components as shown in Tables 1-2 in a ZSK 25 twin screw extruder (300 rpm screw speed, T= 260'C, vacuum, 23 kg/hr throughput). After drying the granules, the materials were injection molded into specimen parts in order to measure the properties as shown in Tables 1-2.

The properties were measured as follows:
Surface defects: visual inspection
MVR: ISO1133 (2.16 kg and 265 ºC), 300 seconds
Izod notched impact strength: ISO180, 23 ºC
Charpy notched impact strength: ISO179, 23 ºC
Tensile modulus: ISO527
Tensile yield stress: ISO527
Tensile yield strain: ISO527
Elongation at break: ISO527
Shrinkage: internal method
Heat Deflection Temperature: ISO75, 1.8 MPa
Vicat temperature: ISO306

As can be understood from Tables 1 and 2, many types of materials cause surface defects when mixed with a polyester and a polyolefin (CE 2-3; CE9-18). Notably, maleic anhydride grafted polyolefin leads to surface defects (CE2 and 3). Only when the functional group is modified to comprise a hydroxyl group, the functionalized polyolefin works as a compatibilizer which does not lead to surface defects (Ex 4). The mechanical properties of the composition obtained are comparable to those obtained using a GMA-containing compatibilizer (CE1 vs Ex 4). The hydroxyl functionalized polyolefin can also be reacted with a polyester to obtain similar desirable results (Ex 5-7). Thus, GMA-free compatibilizers were discovered which result in similar desirable properties as a compatibilizer comprising GMA.

**Table 1**

| | | CE1 | CE2 | CE3 | Ex 4 | Ex 5 | Ex 6 | Ex 7 |
|---|---|---|---|---|---|---|---|---|
| PET1 | % | 90.0 | 90.0 | 90.0 | 90.0 | 87.0 | 86.6 | 86.2 |
| POE1 | % | 8.9 | 2.5 | 2.5 | 7.0 | 8.0 | 7.7 | 7.4 |
| AX8840 | % | 1.1 | | | | | | |
| POE-g-MAH #1 | % | | 7.5 | | | | | |
| POE-g-MAH #2 | % | | | 7.5 | | | | |
| POE-g-OH | % | | | | 3.0 | | | |
| POE-g-PET | % | | | | | 5.0 | 5.7 | 6.4 |
| Irganox 1010* | % | 0.25 | 0.25 | 0.25 | 0.25 | 0.25 | 0.25 | 0.25 |
| Irgafos 168* | % | 0.25 | 0.25 | 0.25 | 0.25 | 0.25 | 0.25 | 0.25 |
| Surface defects (pearlessenc e) | Y/N | N | Y | Y | N | N | N | N |
| MVR 265C / 2.16KG / 300sec | cc/10' | 15 | 24 | 34 | 27 | 41 | 46 | 40 |
| Notched Impact Strength 23 °C | kJ/m² | 11 | 6 | 5 | 9 | 10 | 10 | 9 |
| Unnotched Impact Strength 23 °C | kJ/m² | 8 | 5 | 6 | 6 | 6 | 6 | 6 |
| Tensile Modulus | MPa | 1987 | 2134 | 2158 | 1938 | 1902 | 1948 | 1930 |
| Tensile Yield Stress | MPa | 48 | 52 | 54 | 47 | 47 | 47 | 48 |
| Tensile Yield Strain | % | 4 | 3.9 | 4.0 | 3.7 | 3.7 | 3.6 | 3.7 |
| Elong. at break | % | 147 | 42 | 29 | 183 | 170 | 248 | 148 |
| Shrinkage T-bar | % | 0.9 | 1.3 | 1.0 | 0.8 | 0.8 | 0.7 | 0.8 |
| HDT 1.8 MPa | °C | 65 | 66 | 69 | 65 | 65 | 65 | 64 |
| VICAT B120 | °C | 78 | 90 | 105 | 82 | 75 | 76 | 76 |

The amounts of Irganox 1010 and Irgafos 168 are wt part per 100 wt part of the total of PET1, POE1 and compatibilizer.

**Table 2**

| | | CE8 | CE9 | CE10 | CE11 | CE12 | CE13 | CE14 | CE15 | CE16 | CE17 | CE18 |
|---|---|---|---|---|---|---|---|---|---|---|---|---|
| PET1 | % | 90.0 | 90.0 | 90.0 | 90.0 | 90.0 | 90.0 | 90.0 | 90.0 | 90.0 | 90.0 | 90 |
| POE1 | % | 8.9 | 8.9 | 8.9 | 8.9 | 8.9 | 8.9 | 8.9 | 8.9 | 8.9 | 8.9 | 8.9 |
| PE-GMA | % | 1.1 | | | | | | | | | | |
| PE-BA-MAH | % | | 1.1 | | | | | | | | | |
| PE-MA-MAH | % | | | 1.1 | | | | | | | | |
| PE-BA | % | | | | 1.1 | | | | | | | |
| PE-AE-MAH | % | | | | | 1.1 | | | | | | |
| PE-AH | % | | | | | | 1.1 | | | | | |
| PE-MA | % | | | | | | | 1.1 | | | | |
| LDPE-AH | % | | | | | | | | 1.1 | | | |
| PE-AA | % | | | | | | | | | 1.1 | | |
| PE-VA | % | | | | | | | | | | 1.1 | |
| PE-MAA | | | | | | | | | | | | 1.1 |
| Irganox 1010* | % | 0.25 | 0.25 | 0.25 | 0.25 | 0.25 | 0.25 | 0.25 | 0.25 | 0.25 | 0.25 | 0.25 |
| Irgafos 168* | % | 0.25 | 0.25 | 0.25 | 0.25 | 0.25 | 0.25 | 0.25 | 0.25 | 0.25 | 0.25 | 0.25 |
| FR* | | | | | | | | | | 0.1 | 0.1 | 0.1 |
| Surface defects (pearlessen ce) | Y/N | N | Y | Y | Y | Y | Y | Y | Y | Y | Y | Y |
| MVR 265C / 2.16KG / 300sec | cc/1 0' | 31 | 48 | 45 | 42 | 42 | 38 | 42 | 39 | 33 | 66 | 35 |
| IZOD Notched Impact Strength 23 °C | kJ/m 2 | 14 | 7 | 6 | 7 | 7 | 9 | 9 | 6 | 8 | 5 | 5 |
| Charpy notched Impact Strength 23 °C | kJ/m 2 | 9 | 4 | 3 | 4 | 5 | 5 | 5 | 4 | 10 | 7 | 7 |
| Tensile Modulus | MPa | 2130 | 2175 | 2192 | 2181 | 2176 | 2136 | 2122 | 2201 | 1954 | 1995 | 1964 |
| Shrinkage T-bar | % | 0.9 | 0.8 | 0.6 | 0.7 | 0.7 | 0.7 | 0.6 | 0.7 | 0.3 | 0.4 | 0.4 |
| HDT 1.8 MPa | °C | 66 | 66 | 64 | 63 | 65 | 64 | 64 | 65 | - | 67 | 66 |
| VICAT B120 | °C | 87 | 89 | 89 | 87 | 87 | 87 | 89 | 92 | 74 | 74 | 75 |

The amounts of Irganox 1010 and Irgafos 168 are wt part per 100 wt part per 100 wt part of the total of PET1, POE1 and compatibilizer.

## Claims

1. A composition comprising A) a polyester , wherein the polyester is derived from an aliphatic diol and an aromatic dicarboxylic acid and has repeating units according to structural formula (VIII) 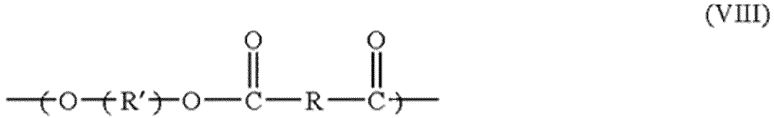
wherein, R' is an alkyl radical comprising a dehydroxylated residue derived from an aliphatic or cycloaliphatic diol, or mixtures thereof, containing from 2 to about 20 carbon atoms and wherein R is an aryl radical comprising a decarboxylated residue derived from an aromatic dicarboxylic acid,
B) a polyolefin and C) a compatibilizer, wherein C) is a functionalized polyolefin containing hydroxyl functional groups or a reaction product of the functionalized polyolefin and a polyester, wherein
the total amount of A) and B) with respect to the total composition is at least 77 wt% and
the amount of C) with respect to the total composition is 0.1 to 23 wt%.

2. The composition according to claim 1, wherein the functionalized polyolefin is prepared by reacting an alkanolamine with a grafted polyolefin formed by grafting a compound comprising an amine-reactive group onto the backbone of a polyolefin.

3. The composition according to any one of the preceding claims, wherein the compound comprising the amine-reactive group is selected from the group consisting of
ethylenically unsaturated carboxylic acids such as maleic acid, fumaric acid, itaconic acid, acrylic acid, methacrylic acid, and crotonic acid;
acid anhydrides such as maleic anhydride and itaconic anhydride; vinyl benzyl halides such as vinyl benzyl chloride and vinyl benzyl bromide;
alkyl acrylates and methacrylates such as methyl acrylate, ethyl acrylate, butyl acrylate, lauryl acrylate, methyl methacrylate, ethyl methacrylate, butyl methacrylate, and lauryl methacrylate; and
ethylenically unsaturated oxiranes, such as glycidyl acrylate, glycidyl methacrylate, and glycidyl ethacrylate,
preferably wherein said compound is maleic anhydride.

4. The composition according to any one of the preceding claims, wherein the alkanolamine is selected from the group consisting of ethanolamine, 2-amino-1-propanol, 3-amino-1-propanol, 2-amino-1-butanol and 2-aminobenzyl alcohol, preferably ethanolamine.

5. The composition according to any one of the preceding claims, wherein the polyolefin of the grafted polyolefin is a linear low density polyethylene (LLDPE), for example made from ethylene and a comonomer which is 1-octene.

6. The composition according to any one of claims 1-5, wherein C) is the functionalized polyolefin containing hydroxyl functional groups.

7. The composition according to any one of claims 1-5, wherein C) is the reaction product of the functionalized polyolefin and the polyester, preferably wherein said polyester is of the same type as B).

8. The composition according to any one of the preceding claims, wherein the amount of A) with respect to the total composition is at least 50 wt%, more preferably at least 75 wt%, for example is 75 to 94 wt%, 80 to 94 wt% or 85 to 92 wt%.

9. The composition according to any one of the preceding claims, wherein A) is selected from the group consisting of polyethylene terephthalate (PET) and polybutylene terephthalate (PBT) and a combination thereof.

10. The composition according to any one of the preceding claims, wherein A) is a recycled PET.

11. The composition according to any one of the preceding claims, wherein the amount of B) with respect to the total composition is at most 40 wt%, more preferably at most 35 wt%, for example 5 to 22.5 wt%, 5 to 20 wt%, preferably 6 to 18 wt% or 8 to 15 wt%, with respect to the total composition.

12. The composition according to any one of the preceding claims, wherein B) is selected from the group consisting of a low density polyethylene (LDPE), a linear low density polyethylene (LLDPE), a high density polyethylene (HDPE), polypropylene (PP) and an elastomeric copolymer of ethylene and an α-olefin having 4 to 10 carbon atoms, and combinations thereof.

13. The composition according to claim 12, wherein B) is selected from the group consisting of an LDPE having a density of 0.916 to 0.940 g/cm³ according to ISO1183, an LLDPE having a density of 0.915 to 0.940 g/cm³ according to ISO 1183 and an HDPE having a density of 0.940 to 0.970 g/cm³ according to ISO1183.

14. The composition according to claim 12, wherein B) is an elastomeric copolymer of ethylene and an an α-olefin having 4 to 10 carbon atoms having a density of 0.850 to 0.910 g/cm³ according to ASTM D792.

15. The composition according to any one of the preceding claims, wherein the composition has at least one, preferably two, most preferably all, of a shrinkage of at most 2% as determined by ISO 294-4, a notched impact strength of at least 5 kJ/m² as determined by ISO180 (23 ºC) and a tensile modulus of at least 1800 MPa.

## Patentansprüche

1. Zusammensetzung, umfassend A) einen Polyester, wobei der Polyester von einem aliphatischen Diol und einer aromatischen Dicarbonsäure abgeleitet ist und sich wiederholende Einheiten gemäß der Strukturformel (VIII) aufweist 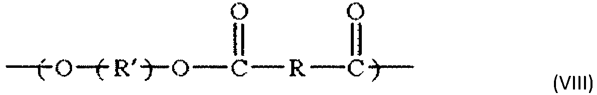
wobei R' ein Alkylrest ist, der einen dehydroxylierten Rest umfasst, der von einem aliphatischen oder cycloaliphatischen Diol oder Mischungen davon abgeleitet ist, wobei er 2 bis etwa 20 Kohlenstoffatome enthält und wobei R ein Arylrest ist, der einen decarboxylierten Rest umfasst, der von einer aromatischen Dicarbonsäure abgeleitet ist,
B) ein Polyolefin und C) einen Verträglichkeitsvermittler, wobei C) ein funktionalisiertes Polyolefin, das Hydroxylgruppen enthält, oder ein Reaktionsprodukt des funktionalisierten Polyolefins und eines Polyesters ist, wobei
die Gesamtmenge von A) und B) in Bezug auf die Gesamtzusammensetzung mindestens 77 Gew.-% beträgt und
die Menge von C in Bezug auf die Gesamtzusammensetzung 0,1 bis 23 Gew.-% beträgt.

2. Zusammensetzung nach Anspruch 1, wobei das funktionalisierte Polyolefin durch Umsetzen eines Alkanolamins mit einem gepfropften Polyolefin hergestellt wird, das durch Aufpfropfen einer Verbindung, die eine aminreaktive Gruppe umfasst, auf die Hauptkette eines Polyolefins gebildet wird.

3. Zusammensetzung nach einem der vorstehenden Ansprüche, wobei die Verbindung, welche die aminreaktive Gruppe umfasst, ausgewählt ist aus der Gruppe, bestehend aus
ethylenisch ungesättigten Carbonsäuren wie Maleinsäure, Fumarsäure, Itaconsäure, Acrylsäure, Methacrylsäure und Crotonsäure;
Säureanhydride wie Maleinsäureanhydrid und Itaconsäureanhydrid; Vinylbenzylhalogenide wie Vinylbenzylchlorid und Vinylbenzylbromid;
Alkylacrylate und Methacrylate wie Methylacrylat, Ethylacrylat, Butylacrylat, Laurylacrylat, Methylmethacrylat, Ethylmethacrylat, Butylmethacrylat und Laurylmethacrylat; und
ethylenisch ungesättigte Oxirane wie Glycidylacrylat, Glycidylmethacrylat und Glycidylethacrylat,
vorzugsweise, wobei die Verbindung Maleinsäureanhydrid ist.

4. Zusammensetzung nach einem der vorstehenden Ansprüche, wobei das Alkanolamin ausgewählt ist aus der Gruppe, bestehend aus Ethanolamin, 2-Amino-1-propanol, 3-Amino-1-propanol, 2-Amino-1-butanol und 2-Aminobenzylalkohol, vorzugsweise Ethanolamin.

5. Zusammensetzung nach einem der vorstehenden Ansprüche, wobei das Polyolefin des gepfropften Polyolefins ein lineares Polyethylen niedriger Dichte (LLDPE) ist, beispielsweise hergestellt aus Ethylen und einem Comonomer, das 1-Octen ist.

6. Zusammensetzung nach einem der Ansprüche 1-5, wobei C) das funktionalisierte Polyolefin ist, das Hydroxylgruppen enthält.

7. Zusammensetzung nach einem der Ansprüche 1-5, wobei C) das Reaktionsprodukt des funktionalisierten Polyolefins und des Polyesters ist, vorzugsweise, wobei der Polyester vom gleichen Typ wie B) ist.

8. Zusammensetzung nach einem der vorstehenden Ansprüche, wobei die Menge von A) in Bezug auf die Gesamtzusammensetzung mindestens 50 Gew.-%, bevorzugter mindestens 75 Gew.-% beträgt, zum Beispiel 75 bis 94 Gew.-%, 80 bis 94 Gew.-% oder 85 bis 92 Gew.-%, beträgt.

9. Zusammensetzung nach einem der vorstehenden Ansprüche, wobei A) ausgewählt ist aus der Gruppe, bestehend aus Polyethylenterephthalat (PET) und Polybutylenterephthalat (PBT) und einer Kombination davon.

10. Zusammensetzung nach einem der vorstehenden Ansprüche, wobei A) ein recyceltes PET ist.

11. Zusammensetzung nach einem der vorstehenden Ansprüche, wobei die Menge von B) in Bezug auf die Gesamtzusammensetzung höchstens 40 Gew.-%, bevorzugter höchstens 35 Gew.-%, zum Beispiel 5 bis 22,5 Gew.-%, 5 bis 20 Gew.-%, vorzugsweise 6 bis 18 Gew.-% oder 8 bis 15 Gew.-%, in Bezug auf die Gesamtzusammensetzung beträgt.

12. Zusammensetzung nach einem der vorstehenden Ansprüche, wobei B) ausgewählt ist aus der Gruppe, bestehend aus einem Polyethylen niedriger Dichte (LDPE), einem linearen Polyethylen niedriger Dichte (LLDPE), einem Polyethylen hoher Dichte (HDPE), Polypropylen (PP) und einem elastomeren Copolymer aus Ethylen und einem α-Olefin, das 4 bis 10 Kohlenstoffatome aufweist, und Kombinationen davon.

13. Zusammensetzung nach Anspruch 12, wobei B) ausgewählt ist aus der Gruppe, bestehend aus einem LDPE mit einer Dichte von 0,916 bis 0,940 g/cm³ gemäß ISO1183, einem LLDPE mit einer Dichte von 0,915 bis 0,940 g/cm³ gemäß ISO 1183 und einem HDPE mit einer Dichte von 0,940 bis 0,970 g/cm³ gemäß ISO1183.

14. Zusammensetzung nach Anspruch 12, wobei B) ein elastomeres Copolymer aus Ethylen und einem α-Olefin, das 4 bis 10 Kohlenstoffatome aufweist, das eine Dichte von 0,850 bis 0,910 g/cm³ gemäß ASTM D792 aufweist, ist.

15. Zusammensetzung nach einem der vorstehenden Ansprüche, wobei die Zusammensetzung mindestens eines, vorzugsweise zwei, besonders bevorzugt alles, von einer Schrumpfung von höchstens 2% gemäß ISO 294-4, einer Kerbschlagzähigkeit von mindestens 5 kJ/m², wie durch ISO180 (23 °C) bestimmt, und einem Zugmodul von mindestens 1800 MPa aufweist.

## Revendications

1. Composition comprenant A) un polyester, dans laquelle le polyester est dérivé d'un diol aliphatique et d'un acide dicarboxylique aromatique et présente des unités répétitives selon la formule structurale (VIII) 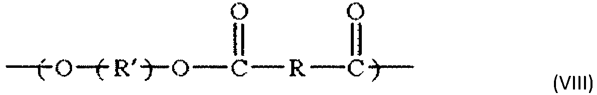
dans laquelle R' est un radical alkyle comprenant un résidu déshydroxylé dérivé d'un diol aliphatique ou cycloaliphatique, ou de mélanges de ceux-ci, contenant de 2 à environ 20 atomes de carbone et dans laquelle R est un radical aryle comprenant un résidu décarboxylé dérivé d'un acide dicarboxylique aromatique,
B) une polyoléfine et C) un agent de compatibilisation, dans laquelle C) est une polyoléfine fonctionnalisée contenant des groupes fonctionnels hydroxyle ou un produit de réaction de la polyoléfine fonctionnalisée et d'un polyester, dans laquelle
la quantité totale de A) et B) par rapport à la composition totale est d'au moins 77 % en poids et
la quantité de C) par rapport à la composition totale est de 0,1 à 23 % en poids.

2. Composition selon la revendication 1, dans laquelle la polyoléfine fonctionnalisée est préparée en faisant réagir une alcanolamine avec une polyoléfine greffée formée en greffant un composé comprenant un groupe réactif à l'amine sur le squelette d'une polyoléfine.

3. Composition selon l'une quelconque des revendications précédentes, dans laquelle le composé comprenant le groupe réactif à l'amine est choisi parmi le groupe constitué de
acides carboxyliques éthyléniquement insaturés tels que l'acide maléique, l'acide fumarique, l'acide itaconique, l'acide acrylique, l'acide méthacrylique et l'acide cratonique ;
anhydrides d'acide tels que l'anhydride maléique et l'anhydride itaconique ; halogénures de vinylbenzyle tels que le chlorure de vinylbenzyle et le bromure de vinylbenzyle ;
acrylates et méthacrylates d'alkyle tels que l'acrylate de méthyle, l'acrylate d'éthyle, l'acrylate de butyle, l'acrylate de lauryle, le méthacrylate de méthyle, le méthacrylate d'éthyle, le méthacrylate de butyle et le méthacrylate de lauryle ; et
les oxiranes éthyléniquement insaturés, tels que l'acrylate de glycidyle, le méthacrylate de glycidyle et l'éthacrylate de glycidyle,
de préférence dans laquelle ledit composé est l'anhydride maléique.

4. Composition selon l'une quelconque des revendications précédentes, dans laquelle l'alcanolamine est choisie dans le groupe constitué de l'éthanolamine, du 2-amino-1-propanol, du 3-amino-1-propanol, du 2-amino-1-butanol et de l'alcool 2-aminobenzylique, de préférence l'éthanolamine.

5. Composition selon l'une quelconque des revendications précédentes, dans laquelle la polyoléfine de la polyoléfine greffée est un polyéthylène linéaire basse densité (LLDPE), par exemple fabriqué à partir d'éthylène et d'un comonomère qui est le 1-octène.

6. Composition selon l'une quelconque des revendications 1-5, dans laquelle C) est la polyoléfine fonctionnalisée contenant des groupes fonctionnels hydroxyle.

7. Composition selon l'une quelconque des revendications 1-5, dans laquelle C) est le produit de réaction de la polyoléfine fonctionnalisée et du polyester, de préférence dans laquelle ledit polyester est du même type que B).

8. Composition selon l'une quelconque des revendications précédentes, dans laquelle la quantité de A) par rapport à la composition totale est d'au moins 50 % en poids, plus préférentiellement au moins 75 % en poids, par exemple est compris entre 75 et 94 % en poids, entre 80 et 94 % en poids ou entre 85 et 92 % en poids.

9. Composition selon l'une quelconque des revendications précédentes, dans laquelle A) est choisi parmi le groupe constitué de polyéthylène téréphtalate (PET) et de polybutylène téréphtalate (PBT) et une combinaison de ceux-ci.

10. Composition selon l'une quelconque des revendications précédentes, dans laquelle A) est un PET recyclé.

11. Composition selon l'une quelconque des revendications précédentes, dans laquelle la quantité de B) par rapport à la composition totale est au plus de 40 % en poids, plus préférentiellement au plus de 35 % en poids, par exemple de 5 à 22,5 % en poids, de 5 à 20 % en poids, de préférence de 6 à 18 % en poids ou de 8 à 15 % en poids, par rapport à la composition totale.

12. Composition selon l'une quelconque des revendications précédentes, dans laquelle B) est choisi parmi le groupe constitué d'un polyéthylène basse densité (PEBD), d'un polyéthylène linéaire basse densité (PEBDL), d'un polyéthylène haute densité (PEHD), de polypropylène (PP) et d'un copolymère élastomère d'éthylène et d'une α-oléfine présentant de 4 à 10 atomes de carbone, et leurs combinaisons.

13. Composition selon la revendication 12, dans laquelle B) est choisi parmi le groupe constitué d'un LDPE présentant une densité de 0,916 à 0,940 g/cm³ selon la norme ISO 1183, un LLDPE présentant une densité de 0,915 à 0,940 g/cm³ selon la norme ISO 1183 et un PEHD présentant une densité de 0,940 à 0,970 g/cm³ selon la norme ISO 1183.

14. Composition selon la revendication 12, dans laquelle B) est un copolymère élastomère d'éthylène et d'une α-oléfine présentant de 4 à 10 atomes de carbone et présentant une densité de 0,850 à 0,910 g/cm³ selon la norme ASTM D792.

15. Composition selon l'une quelconque des revendications précédentes, dans laquelle la composition présente au moins un, de préférence deux, le plus préférentiellement tous, d'un retrait d'au plus 2 % tel que déterminé par la norme ISO 294-4, une résistance aux chocs sur barreau d'au moins 5 kJ/m² telle que déterminée par la norme IS0180 (23 °C) et un module de traction d'au moins 1800 MPa.
